**Europäisches Patentamt**

**European Patent Office**

**Office européen des brevets**

(11) Veröffentlichungsnummer: **0 122 947**

**A1**

(12) ## EUROPÄISCHE PATENTANMELDUNG

(21) Anmeldenummer: **83103885.6**

(22) Anmeldetag: **20.04.83**

(51) Int. Cl.³: **F 16 D 3/30**

(43) Veröffentlichungstag der Anmeldung:
**31.10.84 Patentblatt 84/44**

(84) Benannte Vertragsstaaten:
**AT BE CH FR GB IT LI LU NL SE**

(71) Anmelder: **Sotirov, Ivan, Dipl.-Ing.**
**Langensalza Strasse 44 Postfach 40 1666**
**D-8000 München 40(DE)**

(72) Erfinder: **Sotirov, Ivan, Dipl.-Ing.**
**Langensalza Strasse 44 Postfach 40 1666**
**D-8000 München 40(DE)**

(54) **Gelenkkupplung.**

(57) Gelenkkupplung zum Übertragen gleichlaufender Bewegung zwischen zwei Wellen, deren Achsen sich unter veränderlichem Winkel schneiden, mit allen Gelenk- und Wellenachsen sich in einem Zentrum schneidend, mit Symmetrieebene, welche den Wellenwinkel halbiert und Symmetrieachse, die senkrecht zur Symmetrieebene liegt und durch das Zentrum geht, bestehend aus mindestens zwei Differentialführungen (1 bis 3). Jede Differentialführung hat zwei Endgelenke (1G, 1G, 07, 17'), welche mit beiden Wellenenden verbunden sind und spiegelsymmetrisch zur Symmetrieachse angeordnet liegen, und ein Mittelgelenk (7, 8, 18), das in der Symmetrieachse liegt, sich mit allen anderen Mittelgelenke verbindet und immer zwischen die Endgelenke auf eine Teilkreisbahn sich befindet, wobei die Endgelenkachsen der verschiedene Differentialführungen nich zusammenfallen. Die Differentialführungen sind drehbar zueinander um die Symmetrieachse oder fest zueinader angeordnet. Im zweiten Fall sind ihre Verbindungen mit den Wellen drehbar innerhalb der Wellen gebaut. Analog zu den bekannten Axial-Doppelkreuzgelenke, kann diese Gelenkkupplung in zwei Teile mit zwei Zentrengetrennt werden und über verlängerte, ineinader drehbar gelagerte Mittelgelenke, miteinander verbunden werden.

./...

FIG. 22

# G E L E N K K U P P L U N G

Die Erfindung bezieht sich auf ein Gelenkkupplung zum Übertragen gleichlaufender Drehbewegung bzw. Taumelbewegung zwischen zwei Wellen, deren Achsen sich unter veränderlichem
Winkel schneiden, mit allen Gelenk- und Wellenachsen sich in
einem Zentrum schneidend, mit Symmetrieebene, welche den Wellenwinkel halbiert und Symmetrieachse, die senkrecht zur Symmetrieebene liegt und durch das Zentrum geht.

Bei derartigen Gelenkkupplungen sind mindestens teilweise Zahnräder, Kugelübertragungen oder Stifte angewendet, die Linienübertragungen bzw. Berührungen aufweisen und damit keine großen
Drehmomente übertragen können.

Der Erfindung liegt die Aufgabe zugrunde, Gelenkkupplung als
Sphäre zu konstruieren, daß alle Gelenkachsen sich in einem
Zentrum schneiden und alle Gelenke als Radiallager zu gestalten
um maxial große Drehmomente übertragen zu können.

Diese Aufgabe wird erfindungsmäßig dadurch gelöst, daß mindestens zwei Differentialführungen vorhanden sind, von denen je
eine enthält:
a) ein Mittelgelenk, das mit dem Mittelgelenk jeder anderen
Differentialführung verbunden ist, wobei alle Mittelgelenke
die Symmetrieachse als gemeinsame Achse haben,
b) zwei Endgelenke, die sich symmetrisch zum Mittelgelenk
diesem auf einer Teilkreisbahn nähern oder von ihm entfernen
können, welche die Verbindung mit je einem Wellenende unter dem gleichen Winkelabstand zur Symmetrieachse herstellen,
wobei die Endgelenkachsen der Differentialführungen untereinander, nicht in eine Linie zusammenfallen.

Einige Beispiele sind in den Zeichnungen dargestellt.
Es zeigen:

Fig. 1 bis 4 zeigen die Grundidee der Erfindung;

Fig. 5 bis 12: bekannte Doppelkreuzgelenke;

Fig. 13 bis 15: Differentialführungen;

Fig. 16 bis 18: eine Gelenkkupplung nach dem Differentialführungsprinzip von Fig. 15;

Fig. 19 bis 22: eine Gelenkkupplungsvariante;

Fig. 23 bis 28: eine weitere Gelenkkupplung-Variante in verschiedene Darstellungen;

Fig. 29, 30: eine Variante mit Doppelkreuzgelenk ohne Z-Form-
Kette;

Fig. 31 bis 33: weitere Variante von Gelenkkupplung;

Fig. 34, 35: eine andere Gelenkkupplung-Konstruktion-Variante;

Fig. 36 bis 39 zeigen Variante-Gelenkkupplung mit zwei Zentren
nach der gleiche Grundidee;

Fig. 40, 41: weitere Gelenkkupplung-Variante mit zwei Zentren;

Fig. 42, 43: Gelenkkupplung mit zwei Differentialführungen und
ein Doppelkreuzgelenk.

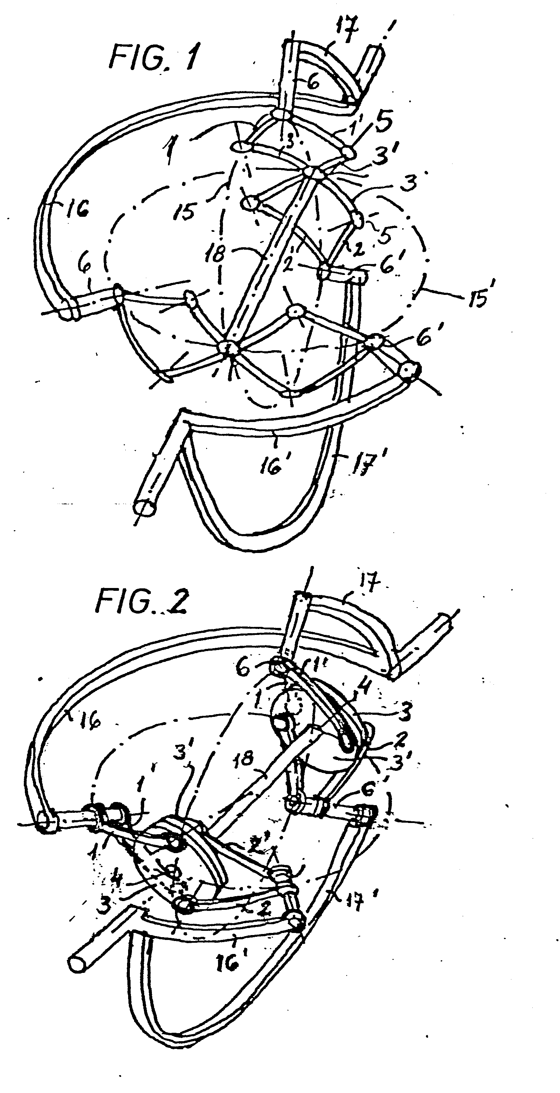

Fig. 1 : Gelenkkupplung mit zwei Differentialführungen. Jede
Differentialführung besteht aus einer Doppel-Z-Kette 1-2-3 und
1'-2'-3' mit Endgelenke 6-6', die sich jeweils auf Teilkreisbahnen 15 bzw. 15' von und zueinander bewegen und die Wellenenden miteinander verbinden, und mit Mittelgelenke versehen
sind, die jeweils in der Mitte zwischen den Endgelenke 6-6' liegen und miteinander innerhalb der Symmetrieachse über Teil 18 verbunden sind. Die Endgelenke 6-6'.sind immer unter dem gleichen Winkelabstand zur Symmetrieachse beweglich angeordnet.

Fig. 2 ist wie Fig. 1, jedoch mit andere Differentialführungsformen, deren mittlere Teile jeder Z-Kette aus Scheiben besteht.

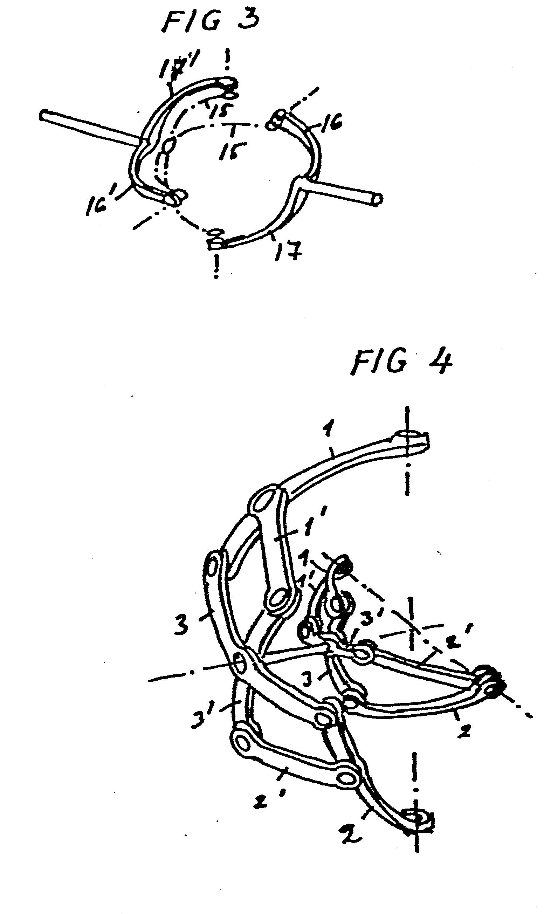

Fig. 3 zeigt schematisch einseitige Anordnung der Differentialführungen;

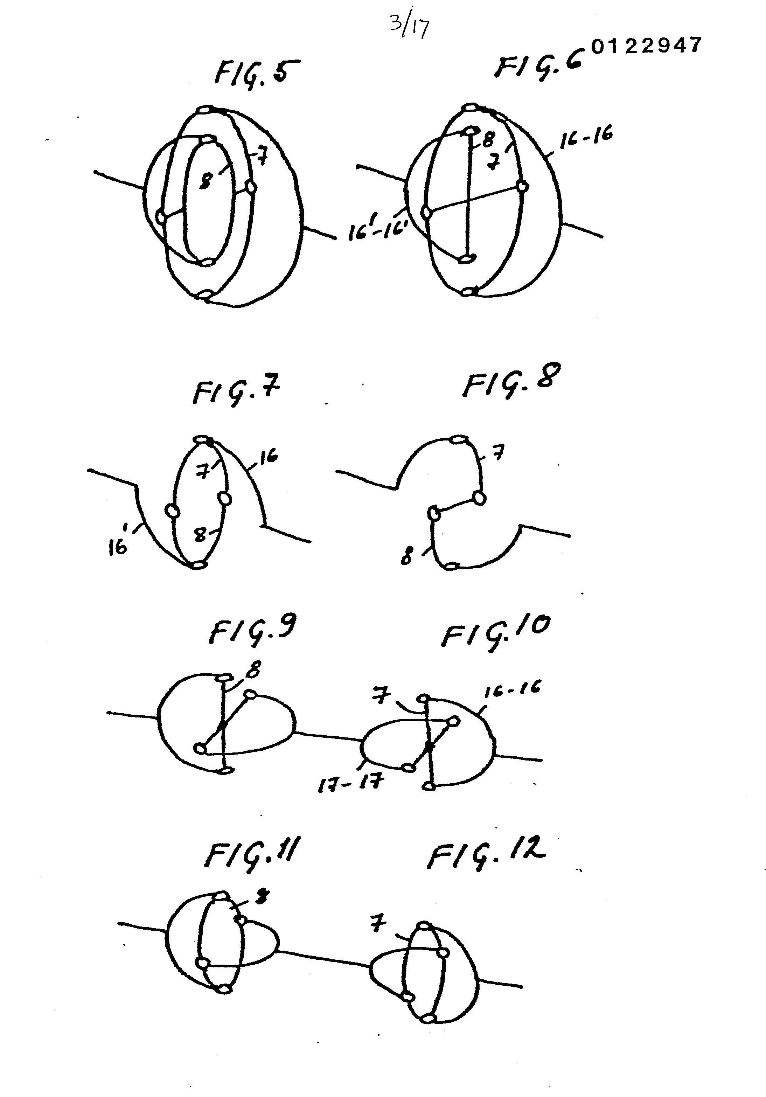

Fig. 5, 6 zeigen Doppelkreuzgelenke aus dem Stand der Technik;

Fig. 7 stellt bekannte Halb-Doppelkreuzgelenk dar;

Fig. 8 stellt bekannte Viertel-Doppelkreuzgelenk dar;

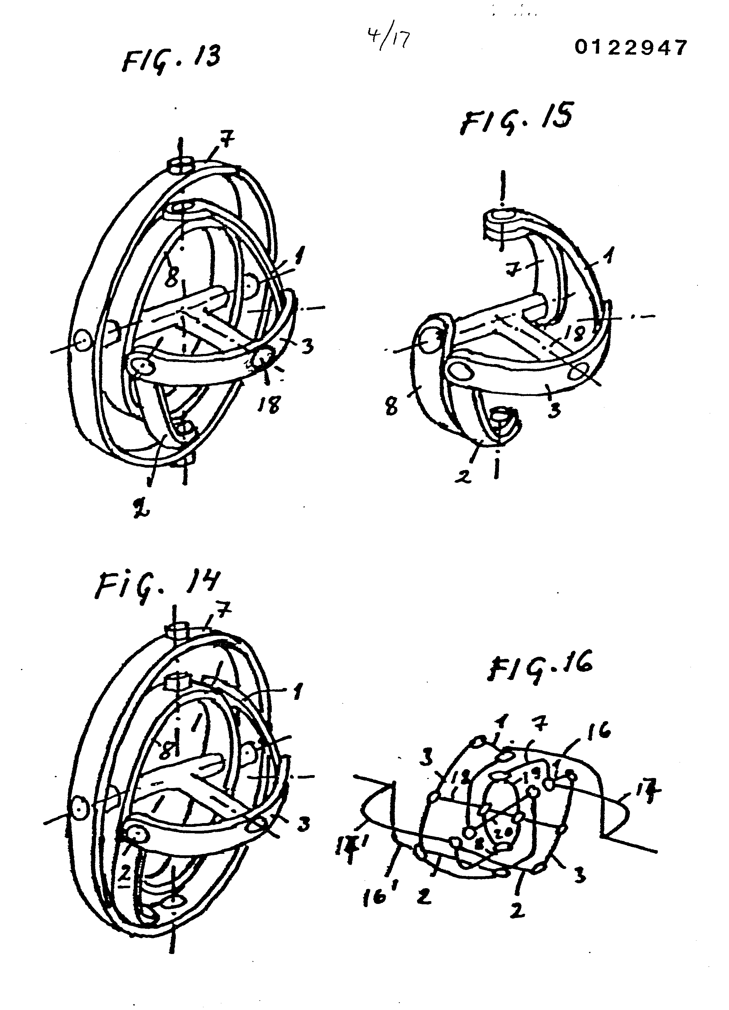

Fig. 9, 10 sind bekannte Axial-Doppekreuzgelenke;

Fig. 13 stellt Differentialführung bestehend aus radiales 7-8 kombiniert mit Z-Form-Kette 1-2-3, deren Mittelgelenk über Teil 18 mit den Zwischengelenke des Doppelkreuzgelenkes verbunden ist;.

Fig. 14 ist wie Fig. 13, die Z-Kette-Endgelenke liegen jedoch auf der einzelnen Kreuzgelenken neben der Gabelenden, während in Fig. 13 fallen die Endgelenkachsen mit den Gabelenden-Verbindung mit den Kreuzgelenke;

Fig. 15 ist gleich Fig. 13, jedoch das Doppelkreuzgelenk ist Viertel-Doppelkreuzgelenk;

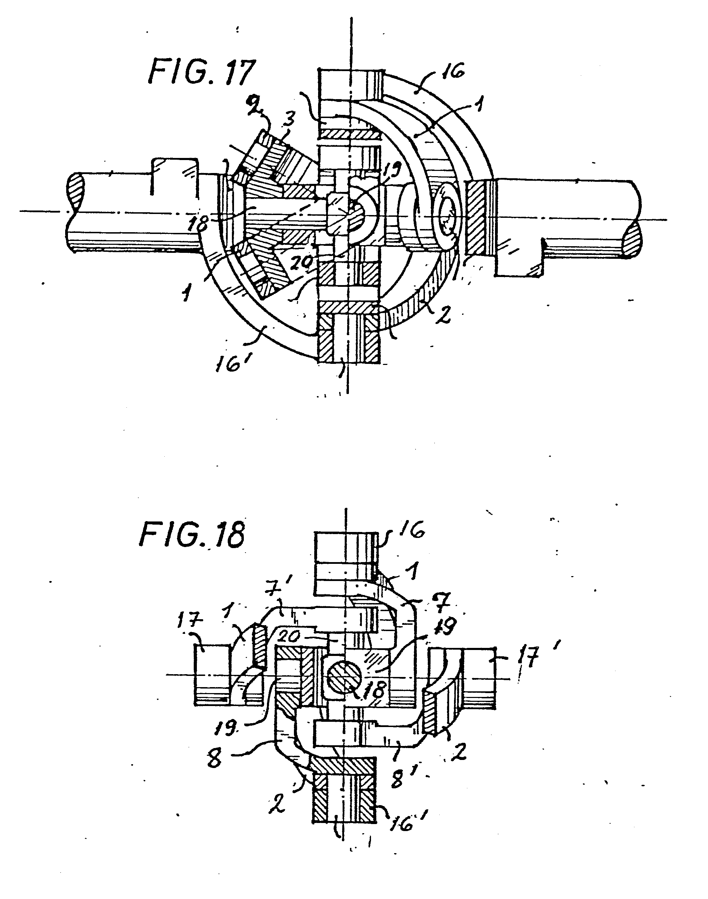

Fig. 16 ist schematische Darstellung einer Gelenkkupplung mit zwei Differentialführungen von Fig. 15. Die beide Zwischengelenke sind drehbar zueinander um die Symmetrieachse angeordnet über den Ring 19, welche um die Teil 18 gelagert .ist; Ring 19 verbindet die Zwischengelenke einer der beiden Viertelkreuzgelenke und ist ein Kreuzring. Das Zapfenpaar 20 ist senkrecht beiderseits an der Symmetrieachse bzw. Symmetriezapfen 18 angebracht und bildet zusammen mit 18 ein Kreuzzapfen. Die Grundidee dieser Variante ist, daß die beide Differentialführungen zueinander drehbar um der Symmetrieachse angebracht sind;

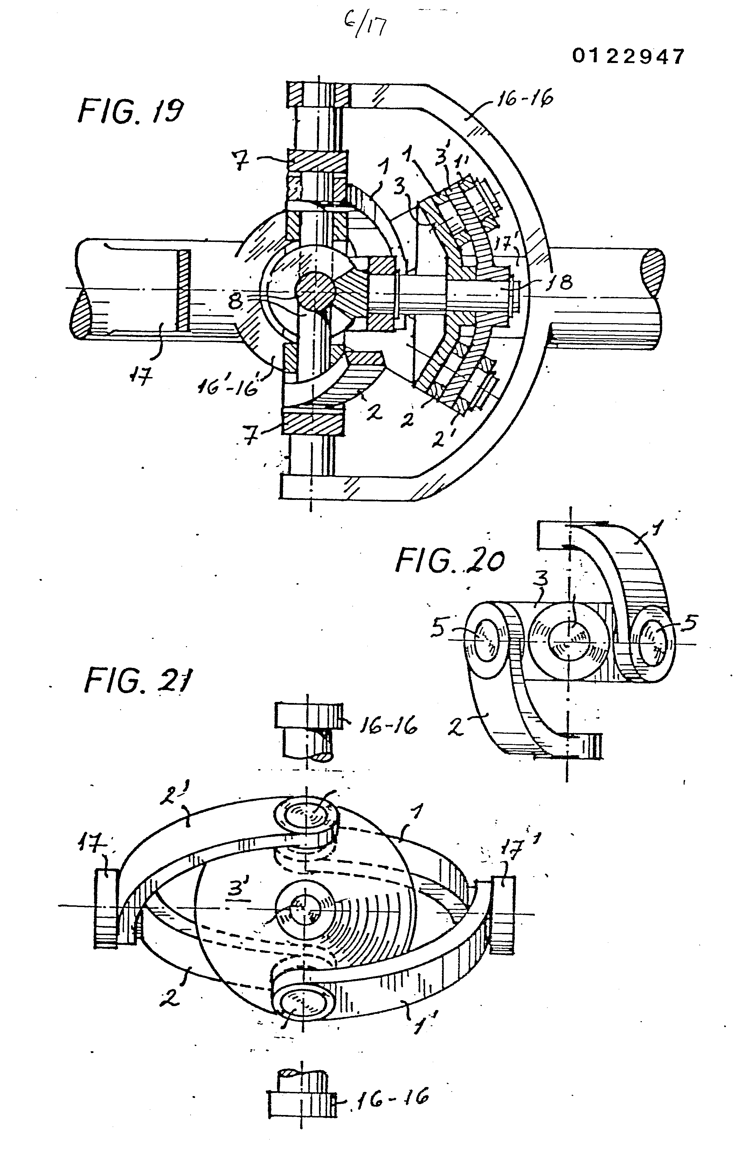

Fig. 19-Variante besteht aus zwei Differentialführungen. Die eine ist ein radiales Doppelkreuzgelenk 7-8 kombiniert mit einer Z-Form-Kette 1-2-3. Die andere Differentialführung ist ein Doppel-Z-Kette 1-2-3, 1'-2'-3', deren Mittelteile 3-3' Scheiben sind.

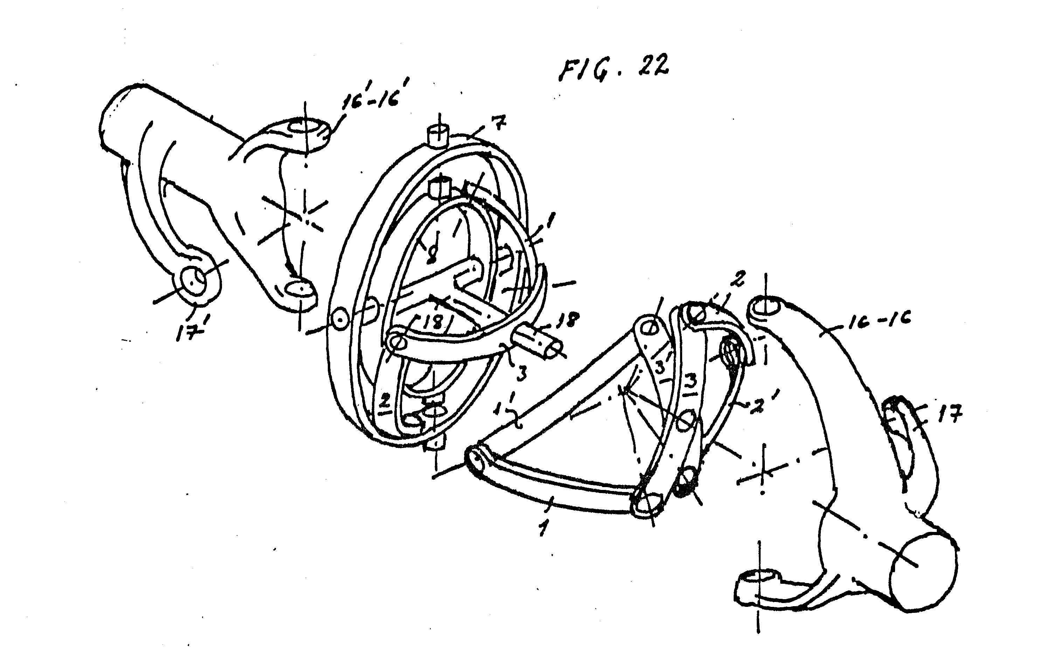

In Fig. 20 ist die Z-Kette und in Fig. 21 die Doppel-Z-Kette von Fig. 19 dargestellt.

Fig. 22 zeigt die Ausführung von Fig.19 in Perspektive, jedoch die Z-Ketten sind in der Mitte mit Hebeln konstruiert, während in Fig. 19 mit Scheiben.

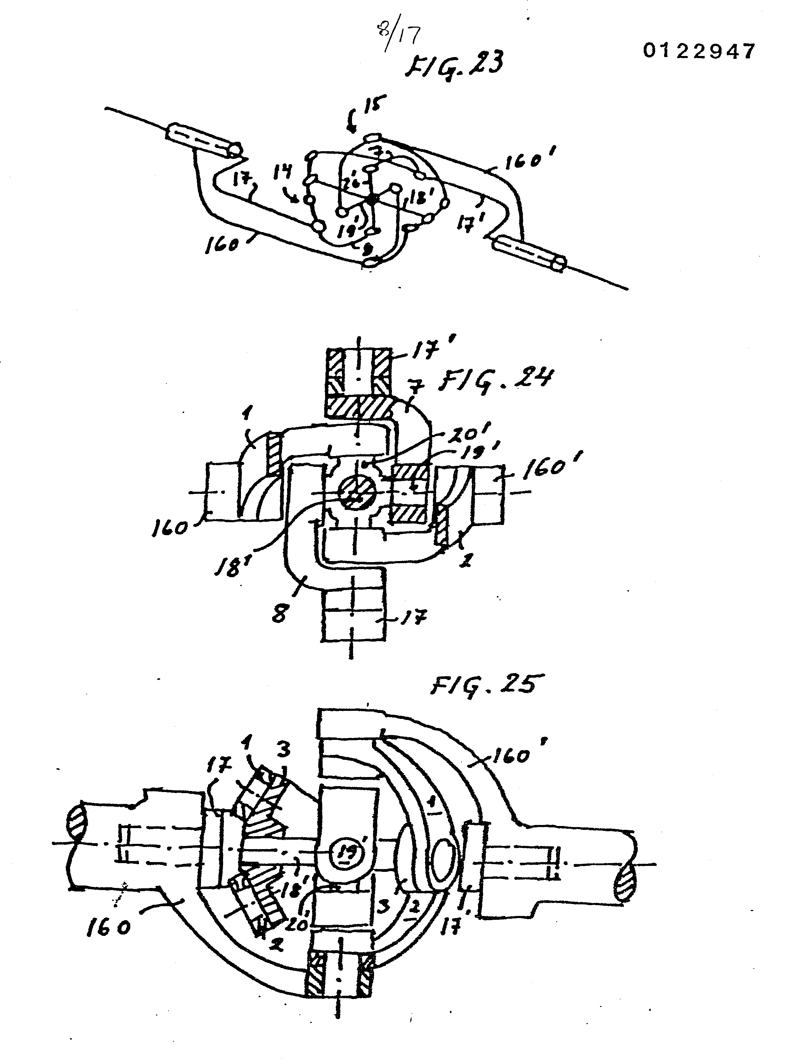

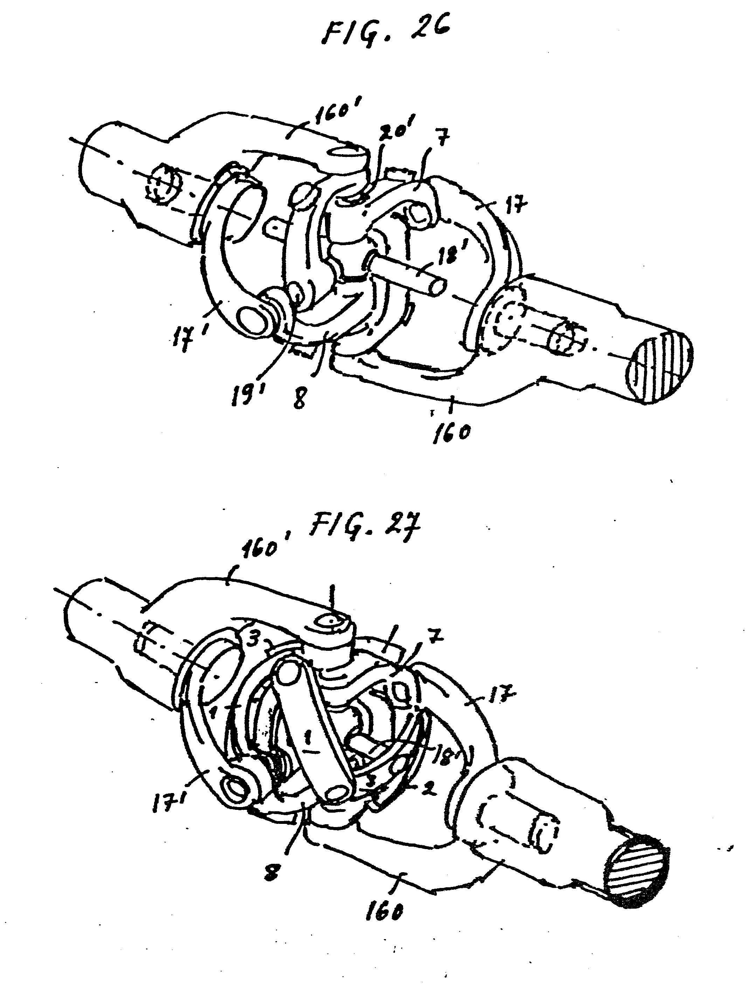

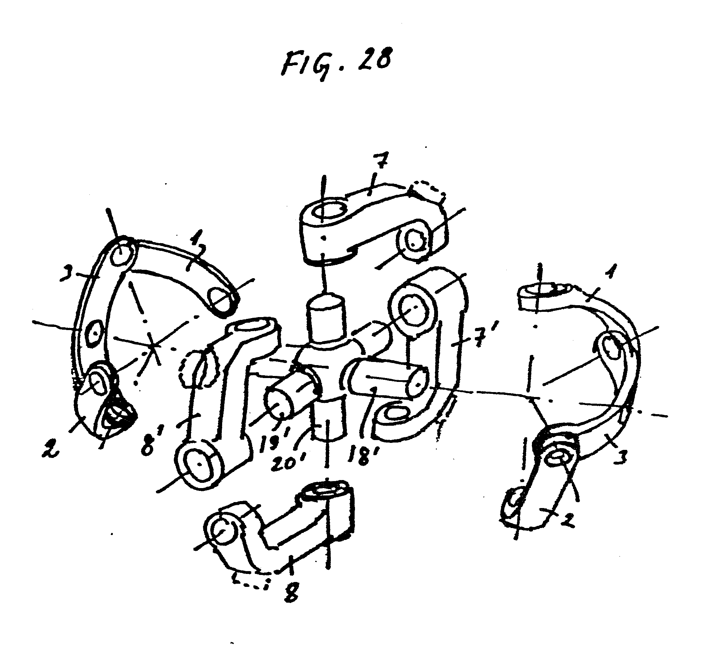

Fig. 23 bis 28 zeigen volgende Variante: zwei Differentialführungen sind in unveränderbaren Winkel zueinander um der Symmetrieachse angebracht. Dafür sind nur zwei Kröpfungen z.B. 160-160' in der Lage das Drehmoment zu übertragen und deshalb nur sie sind mit der Wellen fest verbunden, während die andere Kröpfungspaar 17-17' in die Wellen drehbar gelagert ist. Das Gelenk besteht aus zwei Viertel-Doppelkreuzgelenken, drehbar gelagert über ihre Zwischengelenke an einen Zapfenkreuz in der Mitte, bestehend aus Zapfen 19', 20' und 18', welche senkrecht zueinander stehen. Die Z-Ketten-Enden sind an die Kröpfungsenden in eine Achse mit den einzelnen Kreuzgelenkverbindungen angebracht wie es Fig. 23 bis 25 zeigen. Fig. 26 bis 28 dagegen zeigt Verbindungen der Z-Ketten-Enden an die einzelnen Kreuzgelenken neben der Kröpfungen. Damit erspart man Bauraum in radialer Richtung.

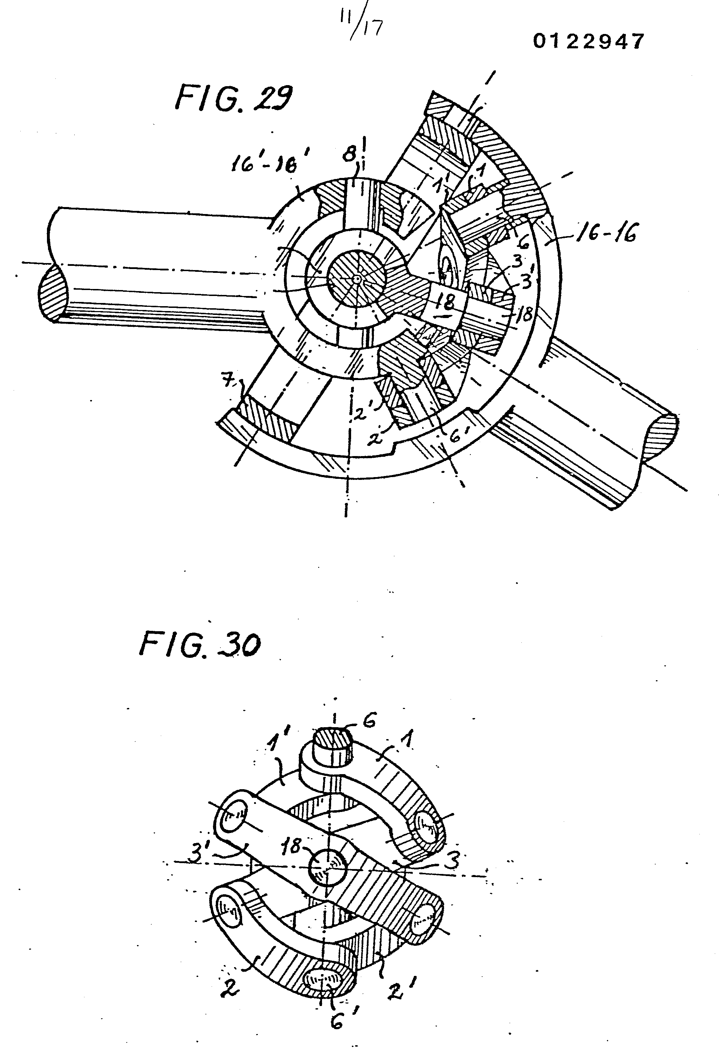

Fig. 29 und 30 zeigen vollständiges Doppelkreuzgelenk mit Doppel-Z-Kette 1-2-3, 1'-2'-3', welche an zwei Gabelenden neben die einzelne Kreuzgelenk-Verbindungen über ihre Enden 6-6' angeordnet sind, wobei diese Enden 6-6' in gleiche Winkelabstand kleiner als 90 Grad zur Symmetrieachse liegen, wenn die Wellenachsen zusammenfallen. Dadurch liegt die Doppel-Z-Kette stabil in jede Richtung und sie kann die Rolle der fehlenden Z-Kette des Doppelkreuzgelenkes übernehmen.

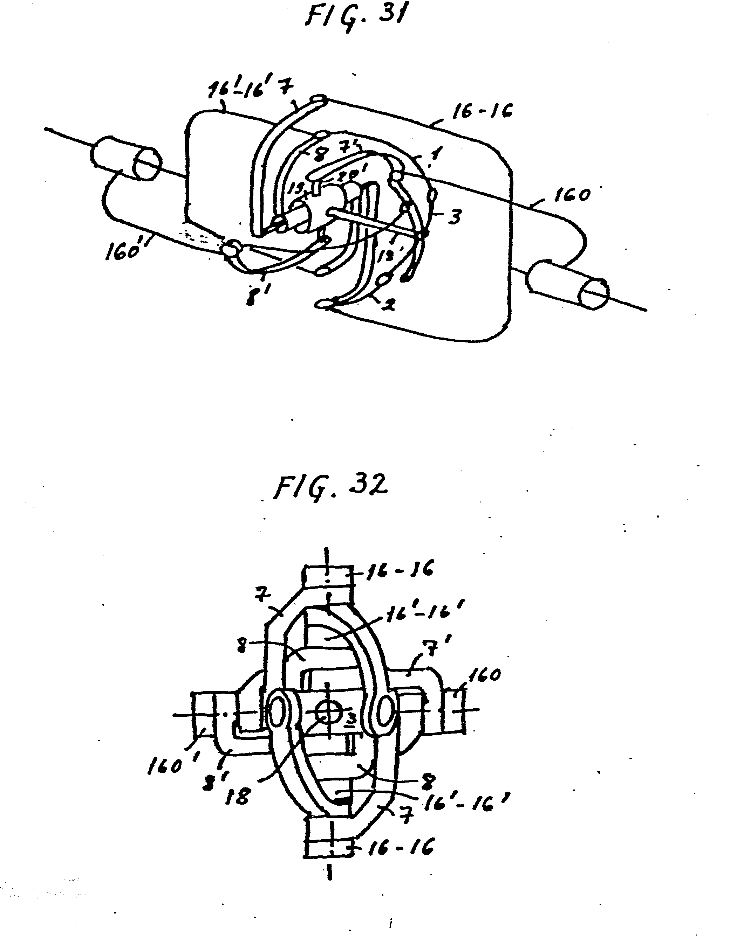

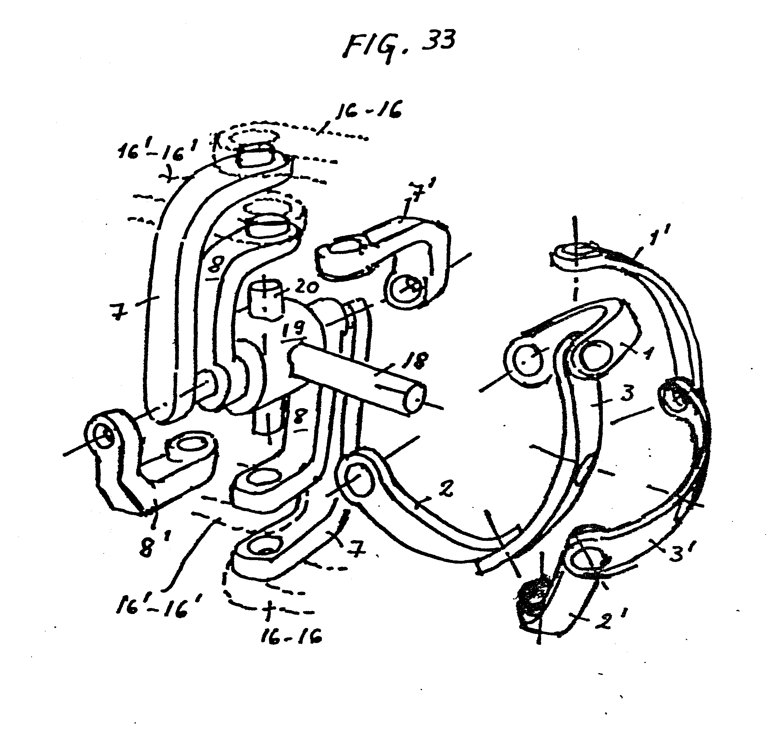

Fig. 31 bis 33 stellen Gelenkkupplung mit zwei Differentialführungen dar. Die eine Differentialführung ist Doppelkreuzgelenk mit Z-Kette, wobei jedes Kreuzgelenk 7, 8, S-Form darstellen und beide Kreuzgelenke sind über ihre Zwischengelenke miteinander drehbar verbunden. Diese Zwischengelenke sind ineinander angebracht. Diese Form der Kreuzgelenke erlaubt Verbindung über Gabelenden und gleichzeitig läßt Raum für zweite Differentialführung, wie in Fig. 23 bis 28. Eine Hülse ist ebenso um die Zwischengelenk drehbar angeordnet (Hülse 19'). An diese Hülse 19 sind Zapfen 20 und Symmetriezapfen 18 senkrecht zueinander fest angebracht. An die Zapfen 18 ist Vierteldoppelkreuzgelenk gelagert und damit, zusammen mit den Z-Kette 1-2-3 (siehe Fig. 33) ergibt sich der zweite Differentialführung. Der Winkel der

beiden Differentialführungen um die Symmetrieachse ist unveränderbar und deshalb sind die Kröpfungen 160-160´drehbar
in oder um die Wellen angebracht.

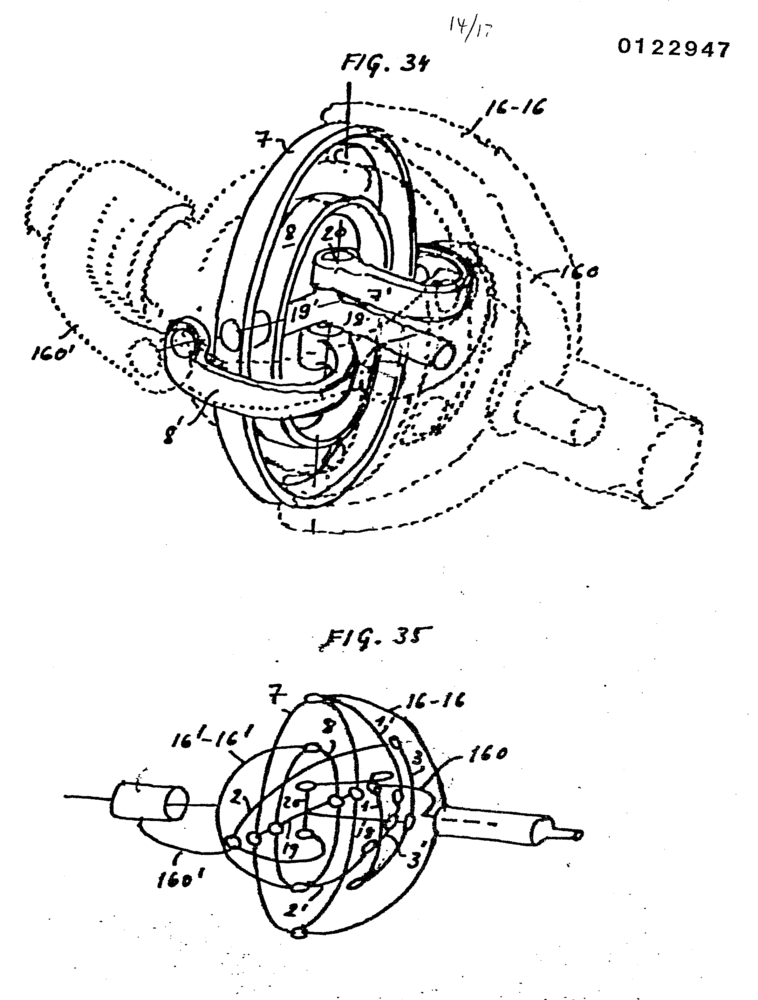

Fig. 34 und 35 stellen weiteres Beispiel von eine Gelenkkuplung dar. Es unterscheidet sich von voriger Ausführung von
Fig. 31 bis 33 dadurch, daß das Doppelkreuzgelenk 7, 8, vollständige Ringe enthält und das Viertel-Doppelkreuzgelenk´7´,
8´, aus Viertelkreuzgelenke 7´,8´besteht, welche in Richtung
der größerer Wellengabel 16-16 um das Doppelkreuzgelenk verbogen sind.

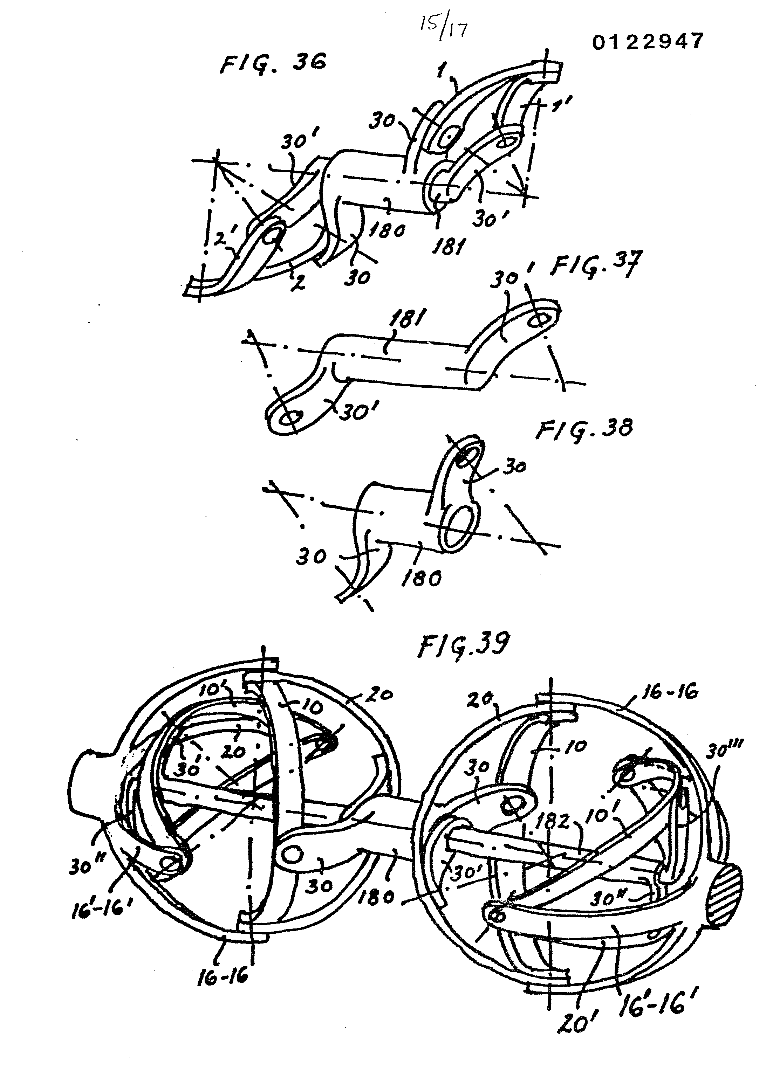

Fig. 36 bis 41 zeigen wie man ein Gelenkkupplung um zwei
Zentren verteilt ohne die Grundidee der Erfindung zu verlassen:
man konzentriert jede Hälfte von jede Differentialführung
um zwei verschiedene Zentren und verbindet sie über ihre Verlängerten Mittelgelenke, welche ineinander drehbar gelagert
entlang der Symmetrieachse sind.Fig. 36 zeigt Teilung von
Differentialführung bestehend aus Doppel-Z-Kette um zwei
Zentren, wobei die verlängerte Mittelgelenke 180, 181 ineinader gelagert sind. In Fig. 37 und 38 sind beide Mittelteile
der Differentialführung von Fig. 36 getrennt dargestellt.
In Fig. 39ist gezeigt wie Endteile 1, 2, 1´, 2´von zwei
Doppel-Z-Kette so verlängert sind daß sie in eine Wellengabel
angebracht werden können. Damit bekommt man modifizierte
Z-Ketten : Modifizierte Doppel-Z-Kette 10, 20, 30, 30´mit
verlängerte Mittelgelenke 180, 181 und modifizierte Doppel-
Z-Kette 10´, 20´, 30´´, 30´´´mit verlängerte Mittelgelenke
182, 183. Die Doppel-Z-Ketten sind so angeordnet, daß die
Mittelteile 30, 30´, 30´´, 30´´´ senkrecht zur Endgelenke
10, 20, 10´, 20´ liegen und das entspricht die Anordnung von

0122947

Fig. 5 und 6 in der Hauptanmeldung bzw. Fig. 20, 21 dieser Anmeldung.

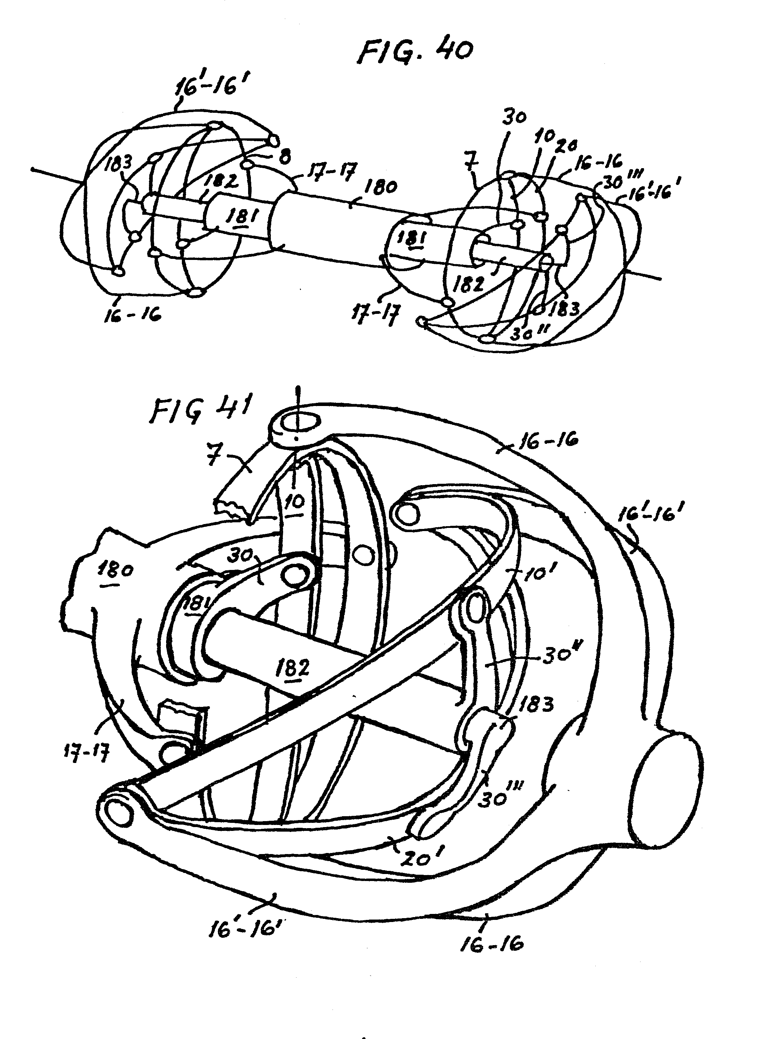

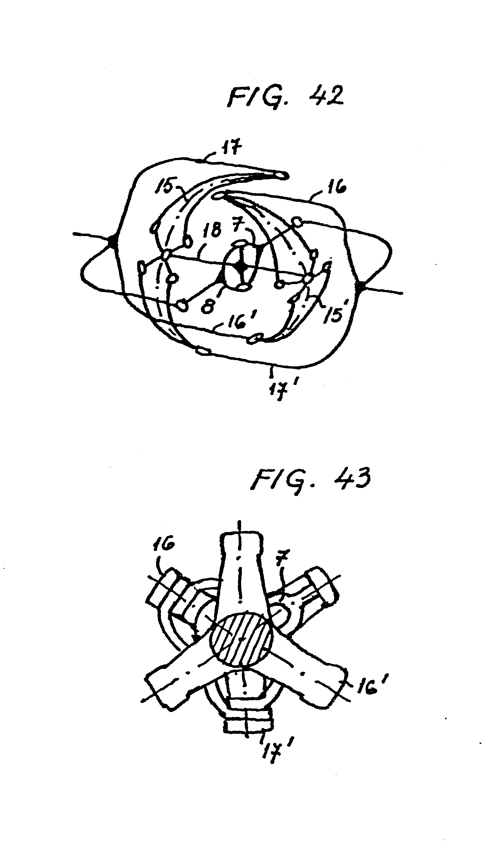

Fig. 40 und 41 zeigen eine Gelenkkupplung mit zwei Zentren bestehend aus zwei Differentialführungen. Die eine Differentialführung ist eine Doppelkreuzgelenk mit Z-Kette, wobei das Doppelkreuzgelenk ist Axial-Doppelkreuzgelenk und die Z-Kette ist modifizierte Z-Kette.

Das Axial-Doppelkreuzgelenk besteht aus Zwischenwelle 180 mit fest an sie angebrachte Gabeln 17-17, einzelne Kreuzgelenke 7, 8 und Wellengabeln 16'-16", wobei die Zwischenwelle 180 ist hohl um die verlängerte Mittelgelenke der Differentialführungen aufzunehmen. Die andere Differentialführung ist wie in Fig. 39.

Fig. 42 ist wie Fig. 1, jedoch mit ein zusätzliches Halb-Doppelkreuzgelenk-Verbindung. Alle drei Wellenverbindungen: die beiden Differentialführungen und das Doppelkreuzgelenk sind gleichmäßig um die Wellen angeordnet. Das zeigt Fig. 43.

PATENTANSPRÜCHE

1.Gelenkkupplung zum Übertragen gleichlaufender Drehbewegung bzw. Taumelbewegung zwischen zwei Wellen, deren Achsen sich unter veränderlichem Winkel schneiden, mit allen Gelenk- und Wellenachsen sich in einem Zentrum schneidend, mit Symmetrieebene, welche den Wellenwinkel halbiert und Symmetrieachse, die senkrecht zur Symmetrieebene liegt und durch das Zentrum geht vorhanden ist,

dadurch gekennzeichnet, daß

mindestens zwei Differentialführungen vorhanden sind, von denen je eine enthält:

a) ein Mittelgelenk, das mit dem Mittelgelenk jeder anderen Differentialführung verbunden ist, wobei alle Mittelgelenke die Symmetrieachse als gemeinsame Achse haben,

b) zwei Endgelenke, die sich symmetrisch zum Mittelgelenk diesem auf einer Teilkreisbahn nähern oder von ihm entfernen können, welche die Verbindung mit je einem Wellenende unter dem gleichen Winkelabstand zur Symmetrieachse herstellen,

c) die Endgelenkachsen der Differentialführungen untereinander nicht in eine Linie zusammenfallen.


2. Gelenkkupplung nach Anspruch 1

dadurch gekennzeichnet, daß

die eine Differentialführung ist mit den Wellenenden zum Übertragen des Drehmomentes verbunden, während die anderen Differentialführungen mit Kröpfungen verbunden sind, die um oder in die Wellen drehbar gelagert sind, wobei die Winkel zwischen die Differentialführungen um die Symmetrieachse unveränderbar zueinander sind.

3. Gelenkkupplung nach Anspruch 1,

dadurch gekennzeichnet, daß

die Differentialführungen drehbar um die Symmetrieachse zueinander gelagert liegen und jede Differentialführung zwei Wellenenden verbindet.

4. Gelenkkupplung nach Anspruch 1,

dadurch gekennzeichnet, daß

die Differentialführung aus eine doppel-Z-Kette Besteht.

5. Gelenkkupplung nach Anspruch 1, dadurch gekennzeichnet, daß eine Differentialführung aus eine Doppelkreuzgelenk kombiniert mit eine Z-Kette betseht.

6 Gelenkkupplung nach Ansprüche 4 und 5, dadurch gekennzeichnet, daß

die Mittelteile jeder Z-Kette aus Scheiben besteht.

7. Gelenkkupplung nach Anspruch 1, dadurch gekennzeichnet, daß

die Teilkreisbahnen der zwei Differentialführungen sich senkrecht zueinander kreuzen wenn die Wellenachsen zusammenfallen, die erste Differentialführung ist ein Doppel-Z-Kette verbunden über ihre Endgelenke mit zwei viertelkreisänliche Wellengabeln, die zweite Differentialführung ist ein Doppelkreuzgelenk kombiniert mit eine Z-Kette deren Mittelgelenk mit den Zwischengelenke der Dopelkreuzgelenkes und mit der Mittelgelenk der Doppel-Z-Kette verbunden ist.

8. Gelenkkupplung nach Anspruch 1,2 bestehend aus zwei Differentialführungen,

d a d u r c h   g e k e n n z e i c h n e t,   d a ß

jede Differentialführung ein Viertel-Doppelkreuzgelenk kombiniert mit je eine Z-Kette darstellt und alle Doppelkreuz-zwischengelenk-Zapfen fest und senkrecht miteinander verbunden sind, wobei zwei Symmetrieachsen-Zapfen in zwei Richtungen um das Zentrum zum Verbinden mit den Mittelgelenke der Z-Ketten vorgesehen sind und fest, senkrecht mit der Zwischengelenk-Zapfen verbunden sind.

9. Gelenkkupplung nach Anspruch I,2

d a d u r c h   g e k e n n z e i c h n e t,   d a ß

die eine Differentialführug- ein Doppelkreuzgelenk kombiniert mit einer Z-Kette wie folgt darstellt: das eine Kreuzgelenk ist als S-Form gestaltet, dessen Zwischengelenk innerhalb der lagerschalenartigen Zwischen-Gelenkes der zweites Kreuzgelenkes gelagert ist und ebenso eine S-Form hat, während die zweite Differentialführung aus zwei Viertel-Kreuzgelenke besteht, und jede dieser Viertel-Kreuzgelenke ist an einem Ende um einen Zapfen gelagert, dieser Zapfen ist an einer Hülse senkrecht fest angebracht und diese Hülse ist um die Zwischengelenke der erste Differentialführung gelagert, während die andere Ende jedes Viertelkreuzgelenkes mit je einer Kröpfung gelenkig verbunden ist und jede Kröpfung ist um oder in eine Welle gelagert, und jede der Differentialführungen enthält

eine Z-Kette, deren Mittelgelenk um eine Zapfen gelagert ist,
welche Zapfen senkrecht an die Hülse und senkrecht an die
erste zwei Zapfen fest angebracht ist.


10. Gelenkkupplung nach Anspruch 1, 2,

d a d u r c h   g e k e n n z e i c h n e t,   d a ß

die erste Differentialführung vollständiges Doppelkreuzgelenk
darstellt, deren einzelne Kreuzgelenke radial ineinander liegen und mit Wellengabeln verbunden sind, diese Doppelkreuzgelenk mit eine Z-Kette kombiniert ist, deren Mittelgelenk
an einem Zapfen in den Zwischengelenken des Doppelkreuzgelenkes gelagert ist, während die zweite Differentialführung ebenso Doppelkreuzgelenk darstelt, kombiniert mit eine Z-Kette,
deren Mittelgelenk mit den gleichen Zapfen verbunden ist,
wobei die Zwischengelenke des zweiten Doppelkreuzgelenkes
fest, senkrecht zu den Zwischengelenke der erste Doppelkreuzgelenk und zur Symmetrieachse-Zapfen verbunden sind, wobei
die zweite Differentialführung über Kröpfungen in oder um
die Wellen gelagert ist.


11. Gelenkkupplung nach Anspruch 10

d a d u r c h   g e k e n n z e i c h n e t,   d a ß

das vollständige Doppelkreuzgelenk aus zwei Ring-Kreuzgelenke besteht, das zweite Differentialführung aus zwei
Viertel-Kreuzgelenke, die um das vollständige Doppelkreuzgelenk in Richtung der größeren Wellengabel verbogen sind besteht, und alle Zwischengelenke beider Doppelkreuzgelenke sowie die Mittelgelenke der beiden Z-Ketten um Zapfen gelagert sind, welche Zapfen in einem Stück fest miteinander zusammenverbunden sind.

12. Gelenkkupplung zum Übertragen gleichlaufender Drehbewegung bzw. Taumelbewegung zwischen zwei Teilen,z.B. Wellen, deren Drehachsen sich unter veränderlichem Winkel schneiden, wobei sich alle Gelenkachsen und die Wellenachsen sich in einem sphärischen Zentrum schneiden und sich alle Gelenke auf Kugelflächen um dieses Zentrum bewegen, wobei eine Symmetrieebene, die den Winkel zwischen den Wellenachsen halbiert und eine Symmetrieachse, die senkrecht zur Symmetrieebene liegt und durch das Zentrum geht, vorhanden ist, mindestens zwei Differentialführungen vorhanden sind, von denen je eine enthält:

a) ein Mittelgelenk, das mit dem Mittelgelenk jeder anderen Differentialführung verbunden ist, wobei alle Mittelgelenke die Symmetrieachse als gemeinsame Achse haben,

b) zwei Endgelenke, die sich symmetrisch zum Mittelgelenk diesem auf einer Teilkreisbahn nähern oder von ihm entfernen können, welche die Verbindung mit je einem Wellenende unter dem gleichen Winkelabstand zur Symmetrieachse herstellen,

d a d u r c h   g e k e n n z e i c h n e t ,   d a ß jede Differentialführung aus zwei Viertel-Doppelkreuzgelenken, kombiniert mit eine Z- Kette besteht, die um 90 Grad zueinander um die Symmetrieachse stehen wenn die Wellenachsen in einer Linie zusammenfallen und deren Zwischengelenke zueinander drehbar um die
Symmetrieachse gelagert sind, wobei beide Z-Ketten ihre Mittelgelenke beiderseits auf der Zentrum angeordnet sind.

13. Gelenkkupplung zum Übertragen gleichlaufender Drehbewegung bzw. Taumelbewegung zwischen zwei Teilen, z.B. Wellen,
deren Drehachsen sich unter veränderlichem Winkel schneiden,
wobei sich alle Gelenkachsen und die Wellenachsen sich in
einem sphärischen Zentrum schneiden und sich alle Gelenke
auf Kugelflächen um dieses Zentrum bewegen, wobei eine Symmetrieebene, die den Winkel zwischen den Wellenachsen halbiert und eine Symmetrieachse, die senkrecht zur Symmetrieebene liegt und durch das Zentrum geht, vorhanden ist,

zwei Differentialführungen vorhanden sind, von denen
je eine enthält:

a) ein Mittelgelenk, das mit dem Mittelgelenk der andere
Differentialführung verbunden ist, wobei alle Mitttelgelenke
die Symmetrieachse als gemeinsame Achse haben,

b) zwei Endgelenke, die sich symmetrisch zum Mittelgelenk
diesem auf einer Teilkreisbahn nähern oder von ihm entfernen
können, welche die Verbindung mit je einem Wellenende unter
dem gleichen Winkelabstand zur Symmetrieachse herstellen,

d a d u r c h   g e k e n n z e i c h n e t ,   d a ß

die eine Differentialführung aus vollständiges Doppelkreuzgelenk kombiniert mit eine Z-Kette besteht, die zweite Differentialführung aus Doppel-Z-Kette besteht, die über Endgelenke mit je eine Kröpfung mit je eine Welle verbunden ist
und über die Mittelgelenke um die Symmetrieachse in Form
eines Zapfens gelagert ist, welche Zapfen in dem Zwischenlager des Doppelkreuzgelenkes gelagert ist.


14. Gelenkkupplung zum Übertragen gleichlaufender Drehbewegung bzw. Taumelbewegung zwischen zwei Teilen, z.B. Wellen,
deren Drehachsen sich unter veränderlichem Winkel schneiden,
wobei sich alle Gelenkachsen und die Wellenachsen sich in
einem sphärischen Zentrum schneiden und sich alle Gelenke
auf Kugelflächen um dieses Zentrum bewegen, wobei eine Symmetrieebene, die den Winkel zwischen den Wellenachsen halbiert und eine Symmetrieachse, die senkrecht zur Symmetrieebene liegt und durch das Zentrum geht, vorhanden ist, mindestens zwei Differentialführungen vorhanden sind, von denen
je eine enthält:

a) ein Mittelgelenk, das mit dem Mittelgelenk jeder anderen
Differentialführung verbunden ist, wobei alle Mittelgelenke
die Symmetrieachse als gemeinsame Achse haben,

b) zwei Endgelenke, die sich symmetrisch zum Mittelgelenk
diesem auf einer Teilkreisbahn nähern oder von ihm entfernen
können, welche die Verbindung mit je einem Wellenende unter
dem gleichen Winkelabstand zur Symmetrieachse herstellen,

d a d u r c h   g e k e n n z e i c h n e t ,   d a ß

die Gelenkkupplung um zwei Zentren verteilt ist, und mindestens eine der Differentialführungen um beide Zentren so geteilt ist, daß das Mittelgelenk verlängert um die Symmetrieachse ist.

15. Gelenkkupplung nach Anspruch 14 mit zwei Differentialführungen,

d a d u r c h   g e k e n n z e i c h n e t ,   d a ß

alle Mittelgelenke um die Symmetrieachse ineinander gelagert
sind.

16. Gelenkkupplung nach Anspruch 15

d a d u r c h   g e k e n n z e i c h n e t ,   d a ß

jede Differentialführung eine           Doppel-Z-Kette
darstellt, daß jede Z-Kette um die beide Zentren wie folgt
gleich geteilt ist: je ein Paar von Endgliedern ist um je
ein Zentrum gerichtet, während die Mittelglieder geteilt
sind und durch die Mittelgelenkverlängerungen entlang der
Symmetrieachse ineinader gelagert und miteinander verbunden
sind.

17. Gelenkkupplung nach Anspruch 16

d a d u r c h   g e k e n n z e i c h n e t ,   d a ß

jedes Endglied der Z- bzw. Doppel-Z-Ketten so verlängert
ist, daß es zwei Endgelenke in eine Achse liegend aufweist,
die mit einer Wellengabel an zwei Gabelenden verbunden ist.

18. Gelenkkupplung nach Anspruch 14

d a d u r c h   g e k e n n z e i c h n e t ,   d a ß

das Gelenkkupplung zwei Differentialführungen aufweist, von denen das eine aus einem axiale Doppelkreuzgelenk mit Hohlmittelwelle kombiniert mit einer geteilten Z-Kette, deren Mittelgelenkverbindung in der Hohlmittelwelle drehbar gelagert ist und aus einer geteilten Doppel-Z-Kette, deren Mittelgelenke ebenso innerhalb der Hohlmittelwelle ineinander drehbar gelagert sind.


19. Gelenkkupplung nach Ansprüche 1 bis 18 ;

d a d u r c h   g e k e n n z e i c h n e t ,   d a ß

die Endgelenke jeder Z-Kette bzw. jeder modifizierte Z-Kette mit den Doppelkreuzgelenke neben den Gabeln bzw. Kröpfungen um das Zentrum verbunden sind.

20. Gelenkkupplung nach Anspruch[1,3] dadurch gekennzeichnèt, daß

das Gelenkkupplung aus drei gleichmäßig um die Wellen verteilte Verbindungen besteht: zwei Doppel-Z-Ketten und ein Halb-Doppelkreuzgelenk.

21. Gelenkkupplung nach Anspruch 1, dadurch gekennzeichnet, daß

die Gelenkkupplung aus einen vollständigen Doppelkreuzgelenk und eine Doppel-Z-Kette besteht, wobei diese Doppel-Z-Kette an die Wellenenden, neben die Doppelkreuzgelenk-Verbindungen

0122947

verbunden ist und um die Symmetrieachse symmetrisch, aber in Winkelabstand kleiner als 90 Grad angeordnet ist.

22. Gelenkkupplung nach Anspruch 21, dadurch gekennzeichnet, daß
die Doppel-Z-Kette eine beliebige Differentialführung darstellen kann.

0122947

FIG. 1

FIG. 2

0122947

FIG 3

FIG 4

0122947

FIG.5

FIG.6

FIG.7

FIG.8

FIG.9

FIG.10

FIG.11

FIG.12

FIG. 13

FIG. 15

FIG. 14

FIG. 16

FIG. 17

FIG. 18

0122947

FIG. 19

FIG. 20

FIG. 21

FIG. 22

FIG. 23

FIG. 24

FIG. 25

## FIG. 26

## FIG. 27

FIG. 28

## FIG. 29

## FIG. 30

FIG. 31

FIG. 32

FIG. 33

FIG. 34

FIG. 35

0122947

FIG. 36

FIG. 37

FIG. 38

FIG.39

## FIG. 40

## FIG 41

0122947

FIG. 42

FIG. 43

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 454 011 (NICOLETTI) <br> * Insgesamt * | 1-22 | F 16 D 3/30 |
| | --- | | |
| X | DE-A-2 453 084 (SOTIROV) <br> * Insgesamt * | 1-22 | |
| | --- | | |
| X | US-A-3 739 600 (PERE) <br> * Insgesamt * | 1-22 | |
| | --- | | |
| X | US-A-3 456 458 (DIXON) <br> * Insgesamt * | 1-22 | |
| | --- | | |
| X | CH-A- 293 756 (VOSS) <br> * Insgesamt * | 1-22 | |
| | --- | | RECHERCHIERTE SACHGEBIETE (Int. Cl. 3) |
| X | DE-B-1 202 589 (RHEINMETALL) <br> * Insgesamt * | 1-22 | F 16 D 3/00 |
| | --- | | |
| X | GB-A- 991 346 (BRD CY.) <br> * Insgesamt * | 1-22 | |
| | --- | | |
| X | FR-E- 72 995 (DE SAINT-MICHEL) <br> * Insgesamt * | 1-22 | |
| | --- | | |
| X | US-A-1 899 170 (WAINWRIGHT) <br> * Insgesamt * | 1-22 | |
| | --- -/- | | |

Der vorliegende Recherchenbericht wurde für alle Patentansprüche erstellt.

| Recherchenort <br> DEN HAAG | Abschlußdatum der Recherche <br> 24-06-1983 | Prüfer <br> BALDWIN D.R. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

| | Europäisches Patentamt | **EUROPÄISCHER RECHERCHENBERICHT** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-1 617 016  (DOUGLAS) <br> * Insgesamt * | 1-22 | |
| X | FR-A- 979 086  (GODAR) <br> * Insgesamt * | 1-22 | |
| X | GB-A- 851 349  (ROLLS ROYCE) <br> * Insgesamt * | 1-22 | |
| X | CH-A- 476 929  (SOUTHWESTERN INDUSTRIES) <br> * Insgesamt * | 1-22 | |
| X | FR-A-2 208 478  (LEROY) <br> * Insgesamt * | 1-22 | |
| X | US-A-3 517 528  (ECCHER) <br> * Insgesamt * | 1-22 | RECHERCHIERTE SACHGEBIETE (Int. Cl. ³) |
| A | GB-A- 581 854  (TEAGLE) | | |
| A | AU-D- 20 190  (PHILLIPS) | | |
| A | US-A-3 712 081  (PHILIPP) | | |
| A | GB-A- 671 088  (BOUCHARD) <br> --- -/- | | |

Der vorliegende Recherchenbericht wurde für alle Patentansprüche erstellt.

| Recherchenort <br> DEN HAAG | Abschlußdatum der Recherche <br> 24-06-1983 | Prüfer <br> BALDWIN D.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

| | Europäisches |
|---|---|
| | Patentamt |

**EUROPÄISCHER RECHERCHENBERICHT**

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A- 757 468 (HULSE) | | |
| A | GB-A- 350 634 (MARSHALL) | | |
| A | US-A-3 924 420 (FALK) | | |
| A | FR-A-1 535 633 (BASTID) | | |
| A | FR-E- 92 728 (BASTID) | | |
| A | FR-E- 92 786 (BASTID) | | RECHERCHIERTE SACHGEBIETE (Int. Cl. 3) |
| A | US-A-3 461 688 (GARFINKLE) | | |
| A | DE-C- 694 747 (FRAMO-WERKE) | | |
| A | DE-B-1 199 065 (RHEINMETALL) | | |
| A | GB-A- 274 857 (PARVILLE) | | |
| | --- -/- | | |

Der vorliegende Recherchenbericht wurde für alle Patentansprüche erstellt.

| Recherchenort DEN HAAG | Abschlußdatum der Recherche 24-06-1983 | Prüfer BALDWIN D.R. |
|---|---|---|

Europäisches
Patentamt

**EUROPÄISCHER RECHERCHENBERICHT**

**0122947**

Nummer der Anmeldung

EP 83 10 3885

| | **EINSCHLÄGIGE DOKUMENTE** | | **Seite 4** |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 777 306 (WILDHABER) | | |
| A | DE-C- 709 875 (GUSTLOFF-WERKE) | | |
| A | FR-A- 722 653 (BAERSCH) | | |
| A | GB-A- 594 850 (WINGQUIST) | | |
| A | DE-C- 563 328 (KUNSTMANN) | | |
| A | FR-A- 777 985 (PRECISION MODERNE) | | RECHERCHIERTE SACHGEBIETE (Int. Cl. ³) |
| A | DE-C- 930 056 (VILLARD) | | |
| A | FR-A- 818 717 (CARRIER) | | |

Der vorliegende Recherchenbericht wurde für alle Patentansprüche erstellt.

| Recherchenort DEN HAAG | Abschlußdatum der Recherche 24-06-1983 | Prüfer BALDWIN D.R. |
|---|---|---|